# EUROPÄISCHE PATENTANMELDUNG

(11) **EP 1 271 070 A2**
(43) Veröffentlichungstag der Anmeldung: **02.01.2003**
(21) Anmeldenummer: 02013486.2
(22) Anmeldetag: 17.06.2002
(51) Int. Cl.: F24J 2/26, F24J 2/46

(54) **Solarenergiekollektor**

(30) Priorität: 29.06.2001 DE 10131465
(71) Anmelder: Bayer Aktiengesellschaft, 51368 Leverkusen (DE)
(72) Erfinder: Wagenblast, Joachim, Dr., 134-136 Kennedy Road, Hong Kong (HK)

(57) **Zusammenfassung**

Es wird ein Solarenergiekollektor mit einem speziellen Absorber (1) zur Wärmeübertragung für eine Solarthermie-Anlage beschrieben. Der Absorber (1) besteht aus Metall-Blechen (11) und ―Rohren (12), die mit Hilfe einer thermoplastischen Struktur (15, 115, 116) verbunden sind. Weiterhin werden bestimmte Rahmenformen zum Aufbau eines den Absorber (1) aufnehmenden Solarmoduls beschrieben.

## Beschreibung

Die Erfindung betrifft einen Solarenergiekollektor zur Wärmeübertragung für eine Solarthermie-Anlage.

Kernstück der Erfindung ist ein Absorber bestehend aus Metall-Blechen und -Rohren, die mit Hilfe einer thermoplastischen Struktur verbunden werden. Weiterhin beschreibt die Erfindung einen Rahmen zum Aufbau eines den Absorber aufnehmenden Solarmoduls.

Sonnenkollektoren im Bereich der Solarthermie wandeln die Sonnenstrahlung in Wärme um. Zunächst wird die Sonnenstrahlung auf einen Absorber übertragen, der aus einem beschichteten Kupfer-, Aluminium- oder Edelstahlblech besteht. Beschichtungen aus Titan-Nitrit-Oxid oder Aluminium-Nitrit erhöhen den Absorptionsund reduzieren den Reflexionsanteil. Durch die Aufnahme der Sonnenstrahlung erwärmt sich das Blech. Diese Wärme wird an die auf der Unterseite des Bleches angelöteten oder angeschweißten Rohre weitergeleitet, die miteinander verbunden sind (vgl. DE 197 52 594 A1). Mit Hilfe einer Wärmetauscherflüssigkeit, in der Regel Wasser, wird die Wärme zu einem Verbraucher oder Wärmespeicher geleitet. Der Absorber ist in einem Solarmodul angeordnet, der in der Regel aus einem für die Steifigkeit des Moduls erforderlichen Aluminiumrahmen, einer Abdeckung aus Glas sowie aus einer rückseitig angebrachten Wärmeisolierung besteht (vgl. VDI-Nachrichten Nr. 24, Seite 40, herausgegeben 2000).

Diese in der Praxis eingesetzten Solarmodule haben jedoch den Nachteil, dass die einzelnen Komponenten zeitaufwendig miteinander verbunden werden müssen. Die Metallteile des Absorbers müssen einzeln verlötet werden. Außerdem sind die Lote bleihaltig und führen daher mit steigenden Produktionszahlen zu einer erheblichen Umweltbelastung. Darüberhinaus erschwert das Verlöten der einzelnen Kupferkomponenten ein qualitativ hochwertiges Recycling von Altanlagen zu sortenreinen Werkstoffkomponenten. Das den Absorber umgebende Solarmodul hat zudem den Nachteil, dass der Aluminiumrahmen zusätzlich zu der rückseitigen Wärmeisolierung mit einem geeigneten Dämmmaterial versehen werden muss, will man Wärmeverluste in diesem Bereich minimieren. Außerdem muss der Aluminiumrahmen aufwendig aus mehreren Teilen zusammengesetzt werden.

Der Erfindung liegt daher die Aufgabe zugrunde, Solarenergiekollektoren der eingangs erwähnten Art zu schaffen, die sowohl mit geringem Zeitaufwand gefertigt werden können als auch eine umweltgerechte und recyclingfreundlichere Variante zu den aus dem Stand der Technik bekannten Kollektoren darstellen.

Diese Aufgabe wird erfindungsgemäß dadurch gelöst, dass die wärmeübertragenden Metallrohre und Bleche des Absorbers über eine thermoplastische Komponente miteinander verbunden werden und das Modul, insbesondere mit einem montagefreundlichen und wärmeisolierenden Rahmen versehen wird.

Gegenstand der Erfindung ist ein für Strahlungsenergiekollektor zur Umwandlung in Wärmeenergie sowie ein den Absorber umgebender Rahmen, die beide aus je zwei unterschiedlichen Werkstoffkomponenten aufgebaut sind. Die unterschiedlichen Werkstoffkomponenten sind insbesondere einerseits Metall, Duromer oder endlosfaserverstärkter Kunststoff und zum anderen thermoplastischer Kunststoff.

Gegenstand der Erfindung ist ein Absorber zur Wärmeübertragung für einen Strahlungsenergiekollektor einer Solarthermie-Anlage bestehend aus einer Vielzahl mit einander seitlich überlappend verbundener Absorberplatten und mit einer Vielzahl von Wärmetauscherrohren für die Durchleitung eines Wärmeträgermediums, die mit den Absorberplatten verbunden sind, dadurch gekennzeichnet, dass die Rohre jeweils im Überlappungsbereich benachbarter Absorberplatten und zwischen den Absorberplatten angeordnet sind und dass diese mittels einer Kunststoffnietverbindung zusammengehalten sind.

Der Absorber ist beispielsweise aus einzelnen länglichen Blechstreifen aufgebaut, die im Bereich ihrer Seitenkanten überlappen, d.h. wie Dachziegel übereinanderliegen. Im Überlappungsbereich zweier Blechstreifen befindet sich wenigstens ein Wärmeträger-Rohr, das zwischen die beiden Bleche eingeschlossen ist. Der Anpressdruck wird über Kunststoffniete aufgebracht, die die beiden Bleche entlang der Rohre miteinander verbinden. Der Anpressdruck resultiert aus der behinderten Schwindung, die sich während des Fertigungsprozesses der Kunststoffniete einstellt. Hierzu werden z.B. die Bleche und Rohre in ein Spritzgießwerkzeug eingelegt und mit Kunststoff überspritzt. Die Bleche weisen bevorzugt insbesondere deckungsgleiche Bohrungen auf, die von der Kunststoffschmelze ausgefüllt werden. Der Kollektor wird insbesondere so gestaltet, dass auf der Oberseite (Absorberseite, im Einsatz von der Sonne bestrahlt) Nietköpfe und auf der Unterseite eine durchgehende Verbindungsleiste angeformt ist, die die einzelnen durch die Bleche gehenden Nietzapfen miteinander verbindet. Der Raum im Spritzgießwerkzeug zur Erzeugung der Verbindungsleiste dient insbesondere während des Spritzgießprozesses auch als Verteilerkanal für die Schmelze des Thermoplasten. Der Verteilerkanal sorgt dafür, dass die Bohrungen in den Blechen mit Schmelze ausgefüllt und die entsprechenden Nietzapfen ausgebildet werden können. Gemeinsam mit den Nietköpfen auf der Oberseite des Kollektors bildet die Verbindungsleiste einen Formschluss, der die Bleche im jeweiligen Überlappungsbereich zusammenhält. Durch Erstarren der Schmelze im gekühlten Spritzgießwerkzeug kommt es zur Schwindung des Kunststoffes. Die Schwindung ist jedoch durch die Bleche behindert, so dass sich in den Nietzapfen ein Spannungszustand einstellt, der die beiden Bleche zusammendrückt, so dass sie die dazwischenliegenden Rohre fest umschließen.

Außerdem ist in einer bevorzugten Ausführung der Erfindung an den Rohrenden ein Verteilerkasten insbesondere aus thermoplastischem Kunststoff für das Wärmeträgermedium angebracht. Dieser Verteilerkasten wird bei der Herstellung zunächst noch in einer Seite offen gefertigt und wird in einem zweiten Verfahrensschritt mit einem Deckel aus Thermoplast z.B. durch Reib- oder Ultraschall-Schweißen druckdicht verschlossen.

Der Rahmen für das Solarmodul kann ebenfalls mittels Spritzgießen hergestellt werden. Dabei werden versteifende Blech-Profile (z.B. aus Metall), insbesondere Aluminium, Duromeren oder endlosfaserverstärkten Thermoplast-Kunststoffen in ein Spritzgießwerkzeug eingelegt und über eine Rahmenstruktur aus Thermoplast miteinander verbunden. In einer besonders bevorzugten Ausführung können Profile so angeordnet werden, dass sie nach außen hin die Rahmenstruktur aus thermoplastischen Kunststoff abdecken. In einer Sonderausführung kann auf die metallischen Verstärkungselemente verzichtet werden. Weiterhin weist der Rahmen des Kollektors insbesondere bevorzugt nach oben offen umlaufende Nuten auf, die, nach Aufbringen einer transparenten Abdeckung, zu Luftkammern verschlossen werden und der Wärmeisolierung dienen. Wärmeisolierende Luftkammern können außerdem mit Hilfe der Gas-Injektions-Technik (GIT) oder Wasser-Injektionstechnik (WIT) direkt während des Spritzgießprozesses im Querschnittskern des Rahmens angebracht werden. In einer weiteren Ausführung kann dieser Kanal auch zur Zuführung bzw. Abführung des Wärmeträgermediums genutzt werden.

In einer ebenfalls bevorzugten Ausführung sind Absorber und Rahmen in einem Spritzgießprozess hergestellt. Hierzu werden sowohl die Metallbleche und Rohre für den Absorber als auch die Verstärkungselemente für den Rahmen in ein Spritzgießwerkzeug eingelegt und mit der thermoplastischen Komponente überspritzt. Dabei werden in einem Vorgang die Kunststoffniete und Verbindungsleisten zur Verbindung der Bleche und Rohre, die zunächst noch offenen Verteilerkästen für das Wärmeträgermedium und der Rahmen für das Modul angeformt.

Die thermoplastische Werkstoffkomponente die für Niete, Verteilerkasten und Rahmen besonders geeignet ist, besteht aus einem Kunststoff mit möglichst hohem E-Modul und geringer Spannungsrissanfälligkeit. Hierzu eignen sich besonders teilkristalline glasfaserverstärkte und elastomermodifizierte Polymere oder Polymerblends auf der Basis Polyamid z.B. PA, Polyester z.B. Polybutylenterephthalat oder Polyethylenterephthalat PBT, PET oder Polyolefin z.B. Polypropylen, PP. Darüber hinaus eignen sich glasfaserverstärkte Typen auf Basis von Styrol-Copolymerisaten z.B ABS, insbesondere Mischungen von Polycarbonat mit anderen Thermoplasten PC/ABS, PC/ASA

Die metallischen Werkstoffkomponenten für den Kollektor sind wie üblich insbesondere Kupfer, Aluminium oder Edelstahl. Die Verstärkungselemente für den Rahmen bestehen aus Stahl, Aluminium, Duromeren oder endlosfaserverstärkten Kunststoffen.

Die mit der Erfindung erzielten Vorteile können wie folgt zusammengefasst werden:

Die Konstruktion des Kollektors ermöglicht kurze Fertigungszyklen zur Herstellung von Absorber und Rahmen.

Absorber und Rahmen können in einem Fertigungsprozess nahezu vollständig hergestellt werden.

Der Montageaufwand nach Herstellung der Einzelkomponenten wird stark reduziert durch Bereitstellung eines hoch integrativen Absorber- und Rahmenkonzeptes.

Der Rahmen des Moduls kann durch Anformen von Luftkammern in einer wärmeisolierenden Ausführung hergestellt werden, um Wärmeverluste zu minimieren.

Da die einzelnen Werkstoffkomponenten nur formschlüssig miteinander verbunden sind, können sie zu Recyclingzwecken unter geringem Aufwand wieder voneinander getrennt werden → grobes Zerkleinern, Schreddern und Dichtetrennung.

Die Erfindung wird nachstehend anhand von Figuren beispielhaft näher erläutert, ohne dass dadurch die Erfindung im Einzelnen eingeschränkt wird.

Es zeigen
- Fig. 1: den Aufbau eines erfindungsgemäßen Absorbers in der Ansicht von oben
- Fig. 2: ein Detail aus Fig. 1 mit einem Querschnitt durch die Kollektorfläche (Oberseite)
- Fig. 3: die Unterseite der Ansicht nach Fig. 2
- Fig. 4: den Aufbau eines Solarenergiemoduls für den Absorber nach Fig. 1
- Fig. 5: eine alternative Bauform des Solarenergiekollektors in einer Explosionszeichnung
- Fig. 6: den vorderen Verteilerkasten bestehend aus Pos. 211 + 216 im offenem Zustand
- Fig. 7: eine weitere Bauform des Solarenergiekollektors ohne Absorberstruktur
- Fig. 8: den Absorber zum Kollektor nach Fig. 7
- Figuren 9 bis 12: verschiedene Querschnittsformen des Rahmens des Solarmoduls 2
- Fig. 13: eine weitere Variante des Sonnenenergiekollektors

### Beispiele

### Beispiel 1

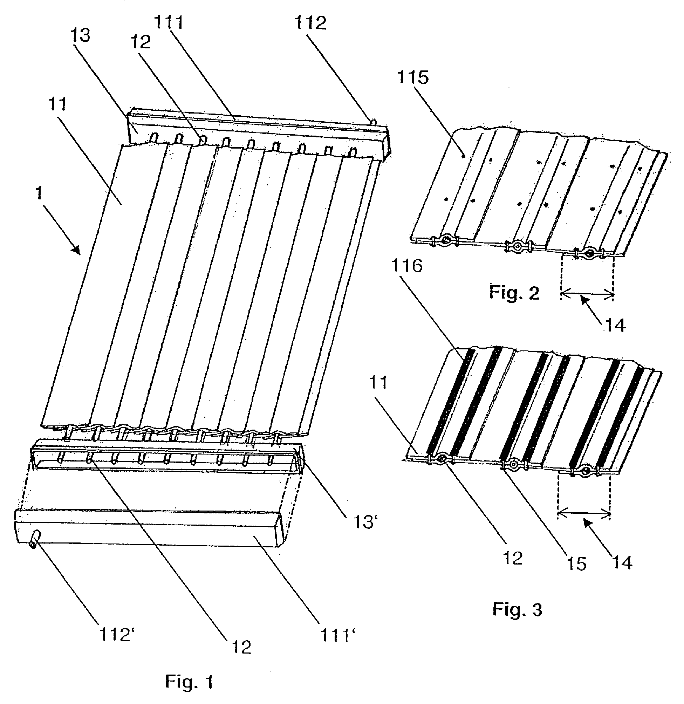

### Absorber für Solarmodul (Fig 1-3):

Figur 1 zeigt einen Absorber 1 der aus Blechstreifen 11, Metallrohren 12, Verteilerkästen 13 und 13' und Deckeln 111 und 111' aufgebaut ist. Die Blechstreifen 11 überlappen sich teilweise und umschließen im überlappten Bereich 14 (s. Fig. 2+3) die Rohre 12. Die Endstücke der Rohre 12 enden im Verteilerkasten 13 und 13'. Die Deckel 111 und 111' zum Verschließen der Verteilerkästen 13 und 13' enthalten die Anschlussstücke 112 und 112' für den Anschluss von Zuführungs- und Ableitungsleitungen für das Wärmetauschermedium (Wasser). Zur Herstellung des Absorbers werden zunächst die Bleche 11 und die Rohre 12 sowie die Anschlussstücke 112 und 112' in ein Spritzgießwerkzeug eingelegt. Daraufhin wird das Spritzgießwerkzeug geschlossen und die thermoplastische Schmelze eingespritzt. Dabei werden die Verteilerkästen 13 und 13', die Niete 15, die Nietköpfe 115 (s. Fig. 2) sowie die Verbindungsleisten 116 (s. Fig. 3) auf die Rohre 12 bzw. Bleche 11 angeformt. Anschließend werden die Deckel 111 und 111' mittels Reibschweißen auf die Verteilerkästen 13 und 13' wasserdicht aufgeschweißt. Mit Hilfe der Nietköpfe 115 und der Verbindungsleisten 116 werden die Niete 15 ausgebildet, die für eine formschlüssige Verbindung der Bleche 11 in den überlappten Bereichen 14 (s. Fig. 2 +3) sorgen. Die Hohlform für die Verbindungsleiste 116 dient während des Spritzgießprozesses gleichzeitig als Verteilerkanal zur Ausformung der einzelnen Niete 15.

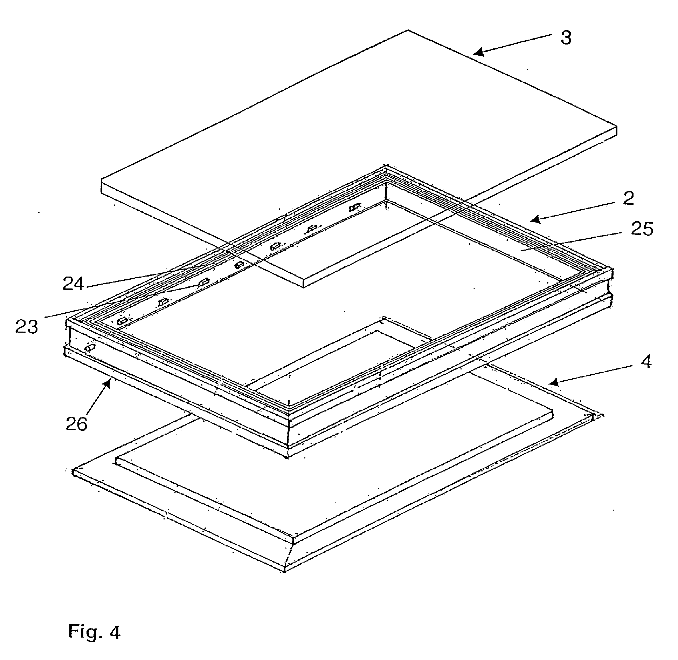

### Aufbau Gehäuse für Solarmodul Fig. 4

Das den Absorber 1 (siehe Figur 1) umschließende Gehäuse des Solarenergiemoduls wird aus dem Rahmen 2, der transparenten Abdeckung 3 und der wärmeisolierenden Grundplatte 4 gemäß Fig. 4 aufgebaut. Der Rahmen 2 besteht aus einem spritzgegossenen glasfaserverstärkten thermoplastischen Kunststoff (Polyamid). Die transparente Abdeckplatte wird aus Glas oder einem hochtransparenten Kunststoff wie z.B. Polycarbonat oder PMMA hergestellt. Im fertig montierten Zustand liegt der Absorber 1 (siehe Fig. 1) auf den angeformten Rastennasen 23 des Rahmens 2. Der Absorber 1 (siehe Fig. 1) kann gemäß Fig. 1 vollständig mit den bereits aufgeschweißten Deckeln 111 und 111' (siehe Fig. 1) in Rahmen 2 (siehe Fig. 4) montiert werden. In einer weiteren nicht gezeigten Ausführungsform besteht auch die Möglichkeit Absorber 1 (siehe Fig. 1) ohne Deckel 111 und 111' zu bilden (siehe Fig. 1) und direkt mit dem Rahmen 2 (siehe Fig. 4) zu verbinden. Dabei werden die Verteilerkästen 31 und 31' des Absorbers 1 (siehe Fig. 1) mit den Flächen 25 des Rahmens 2 (siehe Fig. 4) verschweißt oder verklebt, so dass Verteilerkasten 13 und 13' (siehe Fig. 1) einen Hohlraum mit Rahmen 2 (siehe Fig. 4) bilden, die von den Flächen 25 des Rahmens 2 (siehe Fig. 4) verschlossen werden.

Die transparente Platte 3 wird in dem Rahmen 2 auf die umlaufende Fläche 24 geklebt oder geschweißt. Die wärmeisolierende Grundplatte 4 wird auf der Unterseite 26 des Rahmens 2 angebracht.

### Beispiel 2

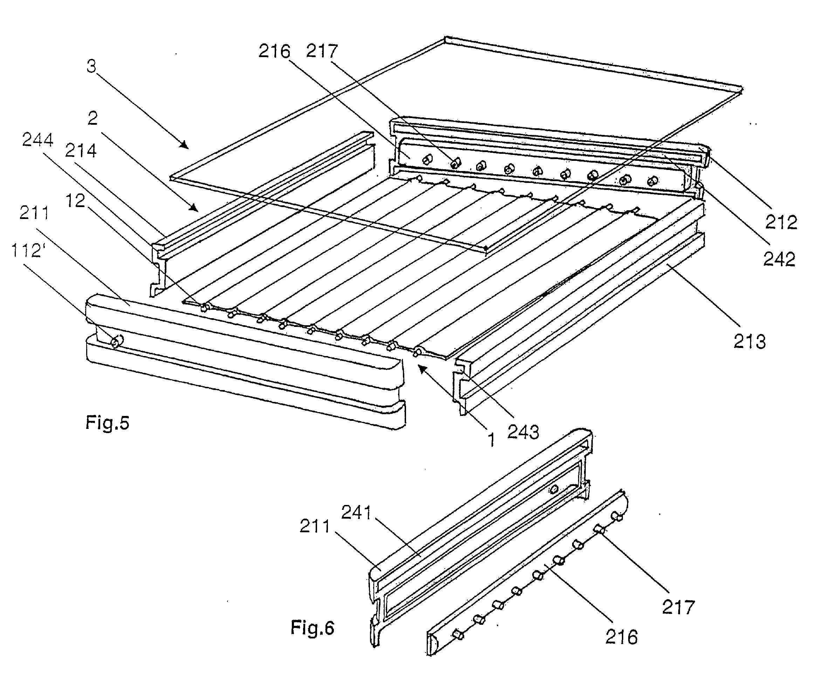

### Absorber mit integriertem Gehäuserahmen (Fig. 5-6)

In Fig. 5 ist in einer Variante zur Bauform nach Fig. 4 der Gehäuserahmen 2 aus vier Teilen 211, 212, 213 und 214 aufgebaut. Der Verteilerdeckel 216 wird gemäß Fig. 5 mit dem hinteren Rahmenelement 211 verschweißt oder verklebt. Ebenso wird mit dem hinteren Rahmenelement 212 und dem vorderen Verteilerdeckel verfahren. Der Absorber 1 wird mit den Enden der Rohre 12 in die Bohrungen 217 der beiden Verteilerdeckel 216 gesteckt und verklebt. Gleichzeitig wird die transparente Abdeckplatte 3 in die Nute 241 und 242 der Rahmenelemente 211 und 212 gesteckt und verklebt. Anschließend werden die seitlichen Rahmenelemente 213 und 214 mit den Rahmenelementen 211 und 212 verbunden, so dass die transparente Abdeckplatte 3 in den Nuten 243 und 244 der Rahmenelemente 213 und 214 steckt und den Rahmen 2 nach oben abschließt.

### Beispiel 3

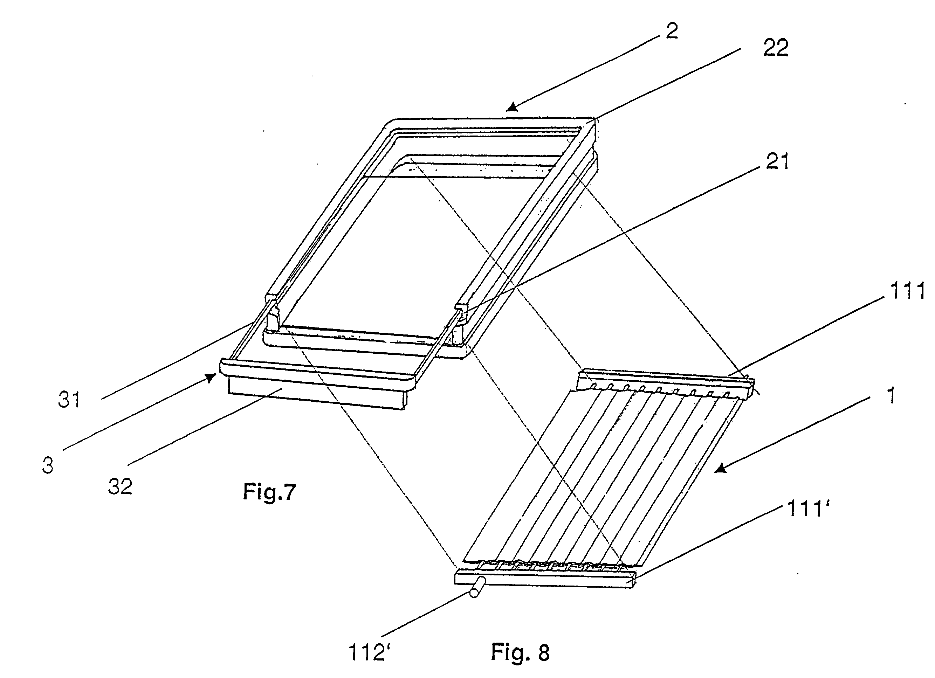

### Solarmodul mit verschiebbarer Abdeckplatte (Fig. 7-8)

In Fig. 7 ist eine Ausführungsvariante des Sonnenkollektors mit einem geänderten Rahmen 2 und einer verschiebbaren Abdeckplatte 3 dargestellt. Der Absorber 1 hierzu ist in Fig. 8 gezeigt. Der Rahmen 2 und die Abdeckplatte 3 sind so ausgeführt, dass der Absorber 1 nachträglich in den Sonnenkollektor ein- bzw. zu Reinigungszwecken/Reparatur ausgebaut werden kann. Dazu wird die transparente Platte 31 der Abdeckplatte 3 in der Nut 21 des Rahmens 2 bewegt. Über das an die Abdeckplatte 3 angeformte Rahmenelement 32 wird die Gehäuseeinheit bestehend aus dem Rahmen 2 und der Abdeckplatte 3 fest verschlossen.

### Beispiel 4

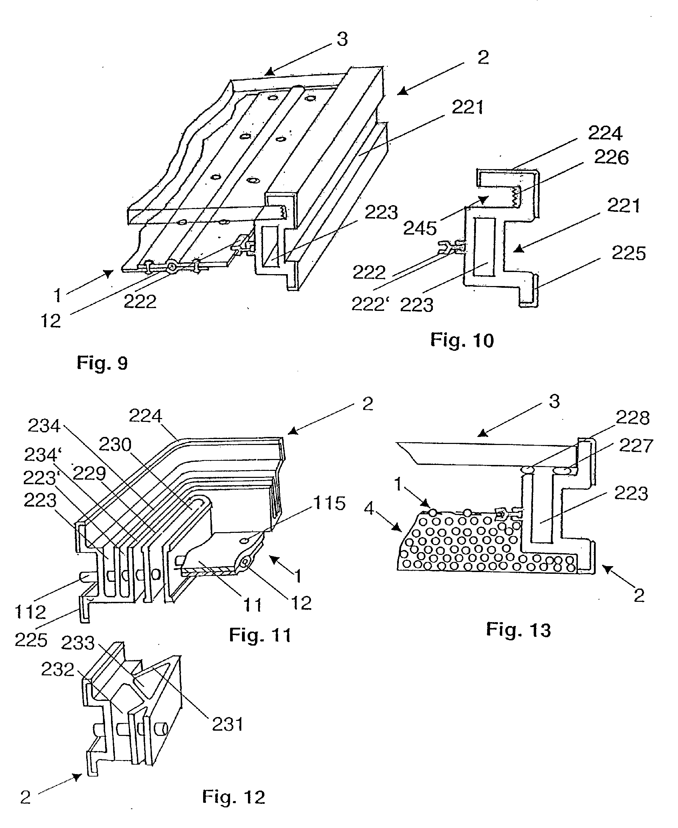

### Beispiele für unterschiedliche Rahmenkonstruktionen (Fig. 9-12)

Fig. 9 zeigt die Teilansicht des Rahmens 2 eines Kollektorgehäuses mit transparenter Abdeckplatte 3 und Absorber 1 in einer Schnittdarstellung. Absorber 1 wird dabei durch an den Rahmen 2 angeformte Klemmelemente 222 gehalten. Nut 221 dient der Befestigung des Sonnenenergiekollektors z.B. mit der Dachkonstruktion.

In Fig. 10 ist der Querschnitt des Rahmens 2 von Fig. 9 dargestellt. Der Rahmen 2 wird verstärkt durch die Aluminiumprofile 224 und 225, die mit dem Thermoplasten des Rahmens verbunden sind. Der Hohlraum 223 dient hierbei der Wärmeisolierung.

Die Befestigungselemente 222 und 222' halten den Absorber 1 (siehe Fig. 9) in einer definierten Lage im Kollektorgehäuse. Die Dichtung 226, die in der Nut 245 des Rahmens 2 angeordnet ist, sorgt für eine wärmeisolierende Verbindung der transparenten Abdeckplatte 3 mit Rahmen 2.

Der Rahmen 2 besteht aus einem thermoplastischen Kunststoff (Polyamid). Er wird mittels Spritzgießen hergestellt. Der Hohlraum 223 wird dann über die Gasinjektionstechnik (GIT) oder Wasserinjektionstechnik (WIT) während des Spritzgießprozesses geformt. Die Befestigungselemente 222 und 222' werden direkt an den Rahmen 2 angeformt.

Alternativ können die Profile, aus denen der Rahmen 2 aufgebaut ist auch extrudiert und anschließend miteinander verbunden werden. Bei extrudierten Profilen wird das Befestigungselement 222' als fortlaufende am Rahmen 2 angeformte Nut ausgeführt. Die Befestigungsklemme 222 wird dabei nachträglich an diskreten Stellen in der Befestigungsnut 222' eingeschnappt.

Fig. 11 zeigt die Teilansicht eines alternativen Rahmens 2 mit Absorber 1 in der Schnittdarstellung. In diesem Beispiel werden der Rahmen 2 und der Absorber 1 weitestgehend in einem Spritzgießprozess hergestellt. Hierzu werden die Bleche 11, die Rohre 12, die Anschlussstücke 112 und die Verstärkungsbleche 224 und 225 in das Spritzgießwerkzeug eingelegt und mit Kunststoff umspritzt. Dabei werden gemäß Fig. 1 die Bleche 11 und die Rohre 12 über Niete 15 (vgl. Fig. 1) und Nietköpfe 115 miteinander verbunden. Gleichzeitig wird der Rahmen 2 mit umlaufenden Rippen 234 und 234' sowie Nuten 223 und 223' (die später durch Aufbringen der transparenten Abdeckplatte 3 zur Hohlräumen geschlossen werden und somit für eine Wärmeisolierung sorgen) sowie der Verteilerkasten 229 mit angeformt. Der Verteilerkasten 229 ist in diesem Beispiel zunächst oben und unten offen und muss daher noch mit zwei Deckeln (bzw. durch Anbringen der Abdeckplatte und der Grundplatte 4) verschlossen werden.

Fig. 12 zeigt eine weitere Variante des in Fig. 11 gezeigten Beispieles für eine Rahmenkonstruktion. In Fig. 11 sind schräg verlaufende Rippen 231 angewendet, so dass sich die Vertiefungen 232 und 233 ergeben, die nach dem Verschließen mit der transparenten Abdeckplatte 3 wärmeisolierende Hohlräume ergeben.

### Beispiel 5

Fig. 13 zeigt die Teilansicht einer weiteren Ausführung des Sonnenkollektors in Schnittdarstellung mit dem Absorber 1, dem Rahmen 2, der transparenten Abdeckplatte 3 und einer wärmeisolierenden Grundplatte 4. In diesem Beispiel wird die wärmeisolierende Grundplatte 4 direkt durch Aufgießen eines PUR-Schaumstoffes auf Absorber 1 in Rahmen 2 erzeugt. Die transparente Abdeckplatte 3 wird mittels Kleberaupen 227 und 228 mit Rahmen 2 verklebt. Der dadurch entstehende Hohlraum 223 sorgt für eine Wärmeisolierung im Rahmenbereich.

Im Betriebszustand werden die in den Beispielen gezeigten Ausführungen des Kollektors über die Anschlüsse 112, 112' mit einem externern Wärmetauscher z.B. einer Heizungsanlage oder eines Wärmespeichers verbunden. Die auf die obere Fläche des Absorbers 1 treffende Sonnenstrahlung wird absorbiert und die freiwerdende Wärme von dem Kühlwasser das die Rohre 12 durchströmt, abgeführt und dem externen Wärmetauscher zugeführt.

## Patentansprüche

1. Absorber zur Wärmeübertragung für einen Strahlungsenergiekollektor einer Solarthermie-Anlage bestehend aus einer Vielzahl mit einander seitlich überlappend verbundener Absorberplatten (11) und mit einer Vielzahl von Wärmetauscherrohren (12) für die Durchleitung eines Wärmeträgermediums, die mit den Absorberplatten verbunden sind, **dadurch gekennzeichnet, dass** die Rohre (12) jeweils im Überlappungsbereich benachbarter Absorberplatten (11) und zwischen den Absorberplatten (11) angeordnet sind und dass diese mittels einer Kunststoffnietverbindung (15, 115, 116) zusammengehalten sind.

2. Absorber nach Anspruch 1, **dadurch gekennzeichnet, dass** die Absorberplatten (11) im Überlappungsbereich durch eine Kunststoffnietverbindung (15, 115, 116) aus thermoplastischem Kunststoff miteinander verbunden sind, die insbesondere mittels Spritzgießen direkt an die Metallteile angeformt sind.

3. Absorber nach Anspruch 1 oder 2, **dadurch gekennzeichnet, dass** die Kunststoffnietverbindung (15, 115, 116) insbesondere im Überlappungsbereich der Absorberplatten (11) auf der Unterseite der Absorberplatten (11) als durchgehende Verbindungsleiste (116) ausgebildet ist.

4. Absorber nach einem der Ansprüche 1 bis 3, **dadurch gekennzeichnet, dass** die Enden der Rohre (12) in einen Verteilerkasten (13, 13'), insbesondere aus thermoplastischem Kunststoff, für die Zuleitung und Ableitung des Wärmeträgermediums münden.

5. Absorber nach einem der Ansprüche 1 bis 4, **dadurch gekennzeichnet, dass** der Absorber von einem Rahmen (2) aus thermoplastischem Kunststoff umfasst ist, der auch eine transparente Platte (3) trägt, die oberhalb der Oberseite des Absorbers angeordnet ist.

6. Absorber nach einem der Ansprüche 4 bis 5, **dadurch gekennzeichnet, dass** die Verteilerkästen (13, 13') als Teil des Rahmens (2) ausgebildet sind.

7. Absorber nach einem der Ansprüche 5 bis 6, **dadurch gekennzeichnet, dass** der Rahmen (2) zusätzlich Wärmeisolationskammern (223, 223') aufweist.

8. Absorber nach einem der Ansprüche 1 bis 7, **dadurch gekennzeichnet, dass** unterhalb der Unterseite des Absorbers eine wärmeisolierende Grundplatte (4), insbesondere aus Polyurethanschaum, angebracht ist.

9. Absorber nach einem der Ansprüche 2 bis 8, **dadurch gekennzeichnet, dass** als thermoplastischer Kunststoff unabhängig voneinander für die Kunststoffnietverbindung (15, 115, 116), die Verteilerkästen (13, 13'), den Rahmen (2) und/oder die Grundplatte (4) ein Kunststoff ausgewählt aus der Reihe: Polyamid, Polyester, insbesondere PET oder PBT, Polyolefin, insbesondere PP, Polycarbonat, Styrolcopolymerisat, insbesondere ABS oder Mischungen der genannten Kunststoffe ggf. mit anderen Kunststoffen, insbesondere Polycarbonat/ABS oder Polycarbonat/ASA-Mischungen.

10. Absorber nach einem der Ansprüche 1 bis 9, **dadurch gekennzeichnet, dass** als Werkstoff für die Absorberplatten (11) gut wärmeleitende Metalle oder Legierungen, insbesondere ausgewählt aus der Reihe Kupfer, Aluminium, Eisen und Nickel verwendet werden.

11. Absorber nach einem der Ansprüche 5 bis 10, **dadurch gekennzeichnet, dass** der Rahmen (2) mittels Stahl oder Aluminiumprofilen (224, 225) zusätzlich verblendet oder verstärkt ist.

12. Solarkollektor aufweisend einen Absorber nach einem der Ansprüche 1 bis 11.

13. Verfahren zur Herstellung des Absorbers nach einem der Ansprüche 1 bis 11, **dadurch gekennzeichnet, dass** die Einzelteile (11, 12) in einem Spritzgießwerkzeug montiert und anschließend durch Anformen von Kunststoff zu einem Absorber vervollständigt werden.
